Europäisches Patentamt

European Patent Office

Office européen des brevets

(11) Publication number: **0 217 450**
**A1**

## EUROPEAN PATENT APPLICATION

(21) Application number: 86201585.6

(51) Int. Cl.⁴: **G05B 19/21**

(22) Date of filing: 15.09.86

(30) Priority: 16.09.85 NL 8502525

(43) Date of publication of application:
08.04.87 Bulletin 87/15

(84) Designated Contracting States:
DE FR GB IT NL

(71) Applicant: **R. de Groot Holding Laag-Zuthem B.V.**
**Pascalweg 3**
**NL-8013 RC Zwolle(NL)**

(72) Inventor: **de Groot, Rob**
**Kolkweg 1**
**NL-8055 PS Laag-Zuthem(NL)**

(74) Representative: **Holjtink, Reinoud et al**
**OCTROOIBUREAU ARNOLD & SIEDSMA**
**Sweelinckplein 1**
**NL-2517 GK Den Haag(NL)**

(54) **Manipulator.**

(57) The invention relates to a manipulator, comprising at least one grab, driving means for moving the grab with a number of translation and/or rotation degrees of freedom which number can be chosen, and control means coupled with said driving means for moving said grab along a path determined by at least a begin position and an end position and picking up an object in said begin position and releasing it in said end position.

The invention has for its purpose, to engineer a manipulator of the type described in such a way that the memory space to be used is minimal, so that the used computer system can be of a relatively simple type.

In order to realize this purpose the invention provides a manipulator which is characterized in that said control means for each degree of freedom comprise a feedback-free counting unit/memory loadable previously in correspondence with the desired displacement in that degree of freedom in such a way that the driving means for each degree of freedom are only operative during an interval in which the contents of said counting unit/memory is smaller than the loaded counting value whilst the counting unit is also adapted for counting to the loaded counting value after program for a desired loading pattern.

FIG.1

FIG. 3

# Manipulator

The invention relates to a manipulator, comprising at least one grab, driving means for moving the grab with a number of translation and/or rotation degrees of freedom which number can be chosen, and control means coupled with said driving means for moving said grab along a path determined by at least a begin position and an end position and picking up an object in said begin position and releasing it in said end position.

Such a manipulator is generally known. In the prior art manipulator for each degree of freedom use is made of a feed-back by means of which the arrival of the grab at the desired position in that degree of freedom is signalled. Such a system has necessarily a relatively complicated construction as it requires a certain amount of memory space, whilst furthermore a certain inertia is inherent to the system.

The invention has for its purpose, to engineer a manipulator of the type described in such a way that the memory space to be used is minimal, so that the used computer system can be of a relatively simple type.

In order to realize this purpose the invention provides a manipulator which is characterized in that said control means for each degree of freedom comprise a feedback-free counting unit/memory loadable previously in correspondence with the desired displacement in that degree of freedom in such a way that the driving means for each degree of freedom are only operative during an interval in which the contents of said counting unit/memory is smaller than the loaded counting value whilst the counting unit is also adapted for counting to the loaded counting value after receiving a starting signal, if desired controlled by a program for a desired loading pattern.

In order to ensure that the system is able to operate with a high speed without having the undesired effect that the end point in a degree of freedom is overshooted as a result of mechanical inertia in the system preference is given to that embodiment in which the control means are adapted for controlling in a slower manner of the driving means at the end of the counting interval.

Very simple is that embodiment, in which this slower driving takes place from a previously determined value before the loaded counting value.

In a manipulator in which the objects are conveyed successively along a fixed path, advantageously use may be made of detection means such as a light source with a photo cell or a micro switch for supplying at the arrival of an object, the start signal to the control means.

In order to ensure the reliability of the manipulator with very simple means, that alternative embodiment is preferred that grab of which is provided with detection means such as at least one micro switch, for determining the presence of a picked-up object.

In a manipulator having a rotatable arm hingeable in a horizontal plane in the manner of an elbow, said arm being or not being up and down movable, at the end of said arm the grab being fixed, with an important advantage use may be made of a linearly drivable driving unit, e.g. a motor provided with a screw spindle for hinging the arm around the elbow, said driving unit contacting at both sides of the elbow in a direction parallel to the direction of the connection line between the rotation centre of the arm and the grab.

This variant surprisingly offers the possibility of obtaining a full linearity with swinging movements.

It should be noted that the displacements in several degrees of freedom can take place simultaneously. Thereto a central control unit may be programmed for conveying the objects from their begin position to their end position along the shortest path, or avoiding obstacles.

The manipulator can be engineered very simply and yet exhibit a very high quality. If, e.g. as a result of a poor quality of the products to be handled, nevertheless an error occurs, e.g. due the fact that a grab adjusted to a maximum clamping force does not grab a product in the right fashion, so that the product falls, an operator can take the required measures on basis of an obtained warning signal.

The grab may be of several types such a spoon, a pair of tongs, a fork-element, a vacuum head or the like. In the English literature often reference is made of a pick-up.

The invention now will be explained with reference to the drawing of some arbitrary embodiments to which the invention is not limited. In the drawing:

Fig. I is a schematic perspective view of a manipulator;

Fig. 2 is a more detailed perspective view, partially broken away of a manipulator according to fig. I;

Fig. 3 a strongly simplified block schematic diagram of a central control unit having control means and driving means for the manipulator according to figs. I , 2 and 4;

Fig. 4 is a view corresponding with fig. 2 of a preferred embodiment;

Fig. 5 is a preferred embodiment of a central control unit having control means and driving means for the manipulator according to figs. l, 2 and 4; and

Fig. 6 is a schematic view of a rotation sensor.

Fig. l shows a rolling road l, along which in accordance with an arrow 2 objects 3, 4 and 5 are conveyed. Objects 3 have to be positioned on a pallet 6, objects 4 on a pallet 7, and objects 5 on a pallet 8. In the present embodiment the loading pattern is very simple, the respective objects are positioned in the same direction uninterrumptedly layer by layer on the respective pallets.

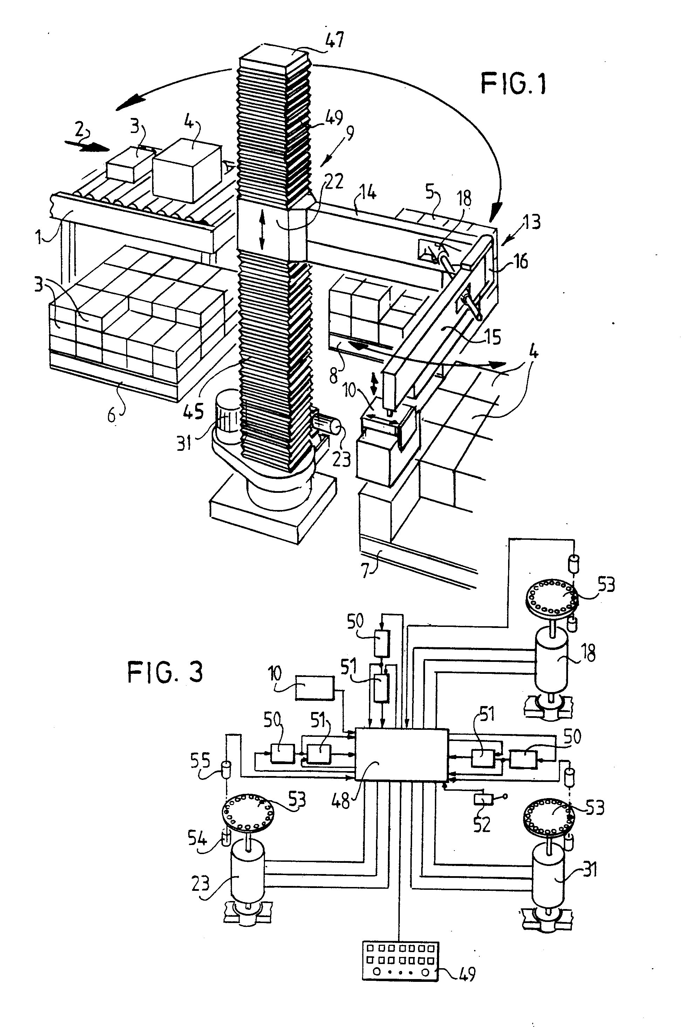

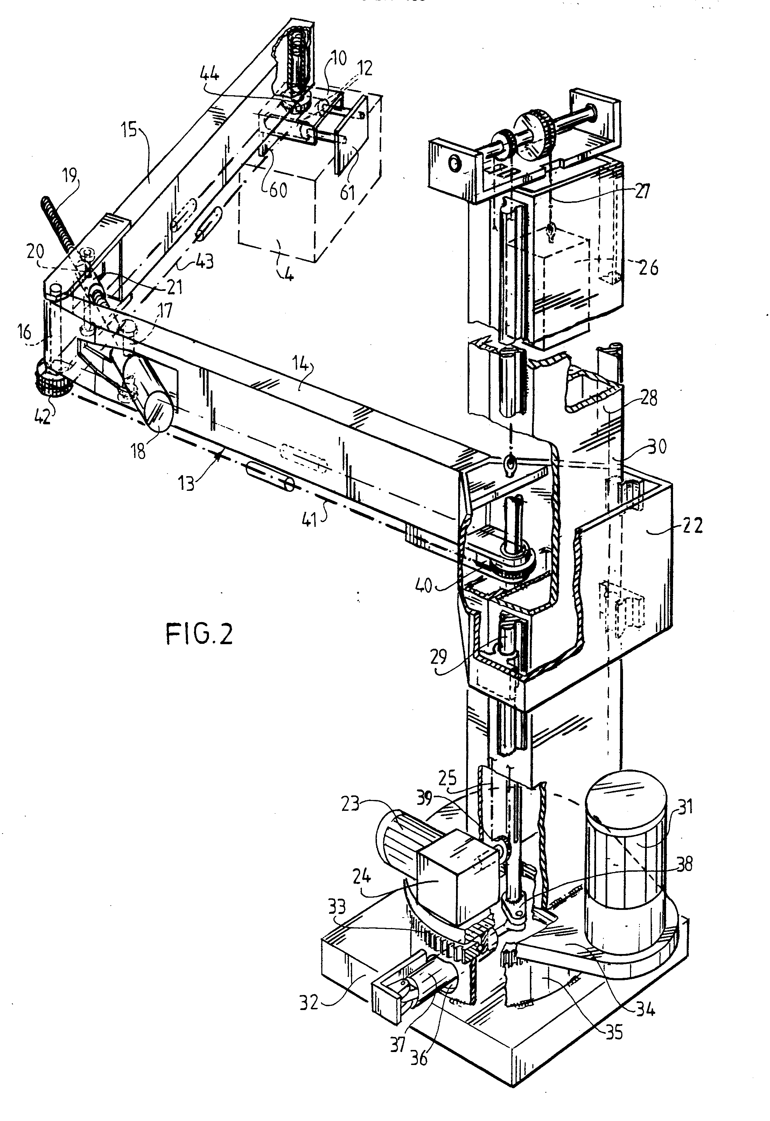

A manipulator 9 comprises a grab l0 the construction of which is shown only schematically in fig. l, but more in detail in fig. 2. As appears from fig. 2 the grab l0 comprises two clamping plates 60, 6l between which the respective objects may be clamped, said clamping plates being movable by means of pneumatic cylinder ll, l2 in a mutually parallel relation.

The grab l0 is supported by an arm l3 consisting of a first arm half l4 and a second arm half l5, said arm halves l4, l5 being hingeable in the manner of a elbow around an axis l6. The first arm half l4 carries a linearly drivable motor l8 hingeable around an axis l7, said motor being provided with a screw spindle l9 co-operating with a sleeve 2l provided with a threaded hole, said sleeve being coupled with a hinging axis 20 fixed at the second arm half l5.

Arm l3 is carried by a carriage 22, which is up and down movable by means of a motor 23, havig a transmission 24 and a chain 25. A counter weight 26 which is coupled with carriage 22 by means of a chain 27, compensates for the weight of carriage 22 and arm l3. Due thereto the motor 23 needs to have only a limited power.

Carriage 22 is guided around a profile beam 28 along guiding rails 29, 30, respectively. Profile beam 28 and due thereto carriage 22 and arm l3, is rotatably drivable by means of a motor 3l co-operating with a pinion 33 fixed on the supporting frame 32. Motor 3l is supported by a supporting plate 34 fixed on the profile beam 28 and rotatable together with that beam 28.

The frame 32 carries the pinion 33 through a cylindrical sleeve 35, exhibiting a hole 36 for receiving a pneumatic cylinder 37, that through a cantilever 38 can cause an axis 39 to swing over a certain angular distance. Said axis 39 carries a pinion 40, over which a chain 4l extends, along the first arm half l4. Chain 4l extends at the end of said arm l4, around a pinion 42, which is freely rotatably fixed around the elbow axis l6 around said pinion 42, also a chain 43 is extending with a certain axial distance relative to chain 4l, said chain 43 extending at the end of the second arm half l5 around a pinion 44, supporting the grab l0.

If now, by means of the energizing of motor 3l, profile beam 30 is rotated, taking along with it arm l3 and therewith grab l0, the angular position of grab l0 will change relative to the seconnd arm half l5 in such a way that it is displaced in parallel relation with itself. By energization of the pneumatic cylinder 37 it can be obtained that by the shown transmission chain, namely cantilever 38, axis 39, chain 4l and chain 43, grab l0 is brought into a desired angular position.

It should be noted that by means of this construction, elimininating the necessity of relatively heavy motors and the end of a manipulator arm, the whole construction may be lighter weight, obviating inertia effects and making the construction less heavy weight.

The direction of screw spindle l09 is parallel with the connection line between axis 39 and the end of the second manipulator arm half l5, particularly the axis of rotation of pinion 44, by means of which it is obtained that a driving of motor l8 over a number of steps is linearly proportional with the displacement in the direction of grab l0, i.e. the centre of pinion 44.

Fig. l furthermore shows, that between the lower side of carriage 22 and carrier plate 34 a bellows 45 extends. On the one hand this bellows has a "cosmetic" function, and on the other hand serves as safeguarding against the intrusion of dust, dirt and the like and furthermore in order to avoid potential contact of operators with moving parts.

A comparable bellows 46 extends between the upperside of carriage 22 and the upperside of the profile 28, which in accordance with fig. l is covered with a covering plate 47.

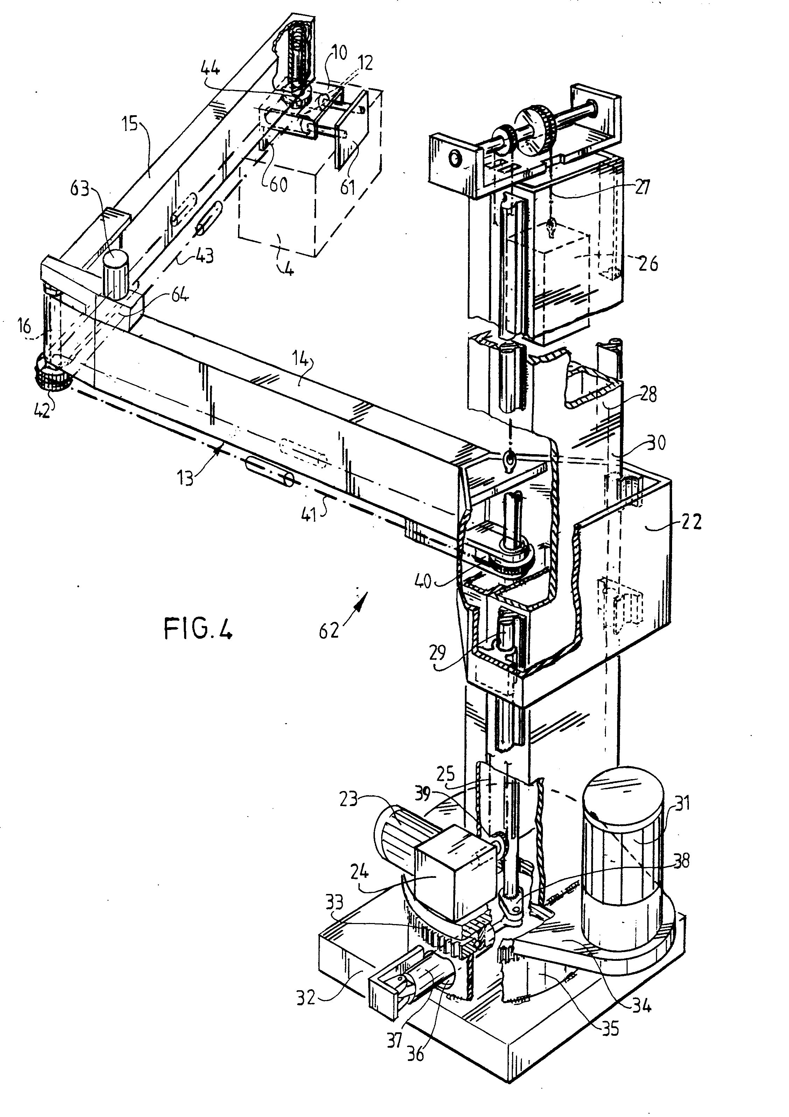

Fig. 3 shows a central control unit 48 provided with a control panel 49 said central control unit 48 serving the purpose of controlling driving motors l8, 23 and 3l. Each motor has a counting unit/memory added to it. The respective counting units/memories comprise "fast" counters 50 and "slow" counters 5l, which are for the sake of ease refer to with the same numerals. After receiving a start signal of a micro switch 52 (not shown in fig. l), but positioned at the end of rolling road l for signalling the arrival of an object, the central control unit starts the operation of counters l5. The program loaded in advance in the central control unit, determines the simultaneous or sequential operation of counters 50, by which the path of the picked-up object is determined. As soon as the end of the loaded counting value of counter 50 is reached, the operatio of counter 50 is taken over

by counter 51 which is of a slower type, at least operating for a desired control slower in such a way that the end of the path, as far as it is determined by the related motor, is moved over with a lower speed, until also the end of the loaded counting value in counter 51 is reached. As soon as this is the case the related motor stops. As soon as all three motors 18, 23 and 31, are no longer energized the end of the path is reached and the grap 10, that was energized after receiving the start signal from micro-switch 52, can be de-energized again for releasing on that position the object to be transported.

In order to be able to make positioning as accurate as possible use may be made of step motors known per se, but it is easier to use an embodiment in which use is made of usual DC-motors performing a rotation measurable by means of an optical disc 53 provided with a plurality of equidistant notches or holes at the circumference. Does the number of steps corresponding with the previously loaded counting value in counter 50 and 51 can be reached.

Fig. 4 shows a manipulator in a preferred embodiment of the invention. Manipulator 62 deviates in only one respect of manipulator shown in fig. 2. Therefore, in fig. 4 corresponding parts have been referred to with the same references as in fig. 2.

As will be clear from figs. I and 2, the maximum swing of arm half 15 relative to arm half 14 is limited. In order to solve this limitation in the embodiment of fig. 4 use is made of a motor 64 fixed to the arm half 14 and which is coupled with a reduction unit 65, the output axis extend in a coaxial relation with hinge axis 16. It will be clear that due to this construction a larger swing may be obtained than in the construction according to figs. I and 2. In a practical embodiment a maximum swing of more than 270° can be obtained. The reduction unit used is of the type that is commercialized by the firm Daval Gear Company Ltd onder the trademark "Duo-drive". The manipulator according to the invention has a very great flexibility which is normally reserved for systems which are appreciably more complicated and thus expensive.

Furthermore it is cheaper than systems having comparable performance by the fact that the construction may be less heavy weight, e.g. due to the ingeneous rotating driving of grab 10.

In the above there was the question of a manipulator taking objects from a conveyor road and positioning them on a pallet according a previously chosen pattern. It will, however, be clear that the manipulator according to the invention is with adapted programming also fitted for unloading a pallet and positioning of a picked-up objects on a conveyor.

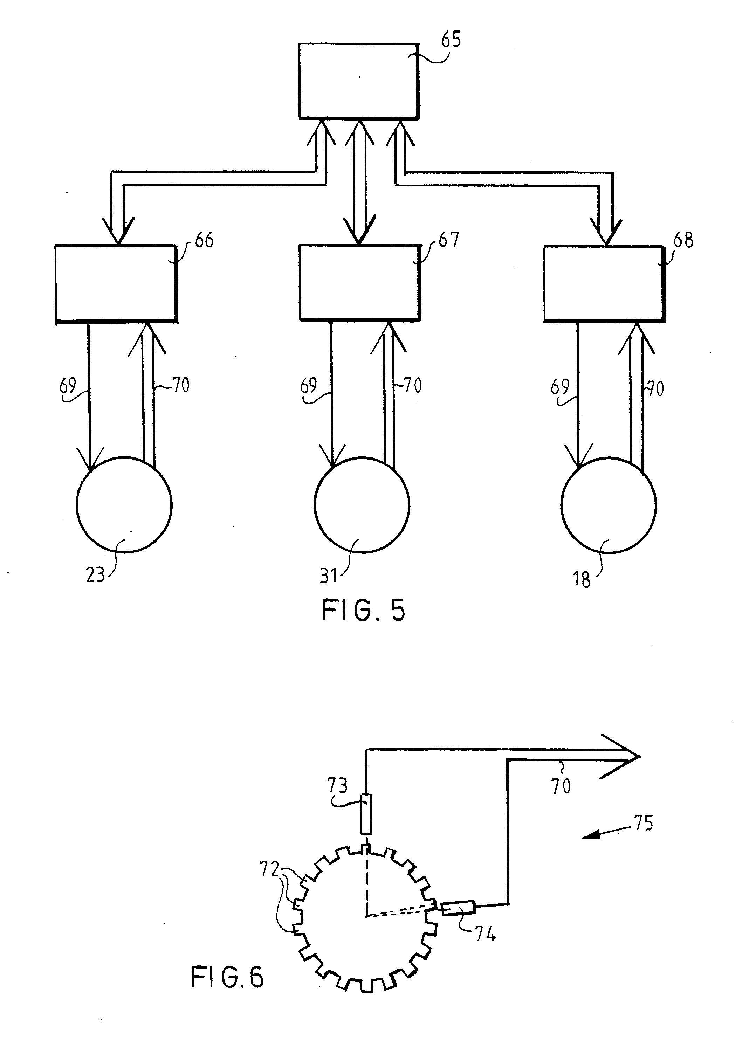

Fig. 5 shows a strongly simplified block-schematic diagram of a preferred embodiment of a central control unit having control means and driving means. Use is made of a central microprocessor 65 and three subordinate microprocessors 66, 67, and 68, provided with driving means for the respective motors 23, 31 and 18. Lines 69 indicate the energization of the motors. Lines 17 are information lines over which information relative to the number of revolutions and the rotation direction of the respective motors are supplied to the respective microprocessors.

Fig. 6 shows a rotation sensor 75, that may be coupled with the output axis of each of motors 23, 31 and 18 (not shown). Sensor 75 comprises a disc 75 carrying a plurality (in this case 18) cams 72, which are arranged in an equidistant manner at the circumference of disc 71. Close to the circumference of the disc two inductive approach switches 73, 74 are positioned, which may be controlled by cams 72 passing in case of rotation of a motor. The approach switches 73, 74 are positioned in such a way that they exhibit relative to the equidistantly arranged cams 72 (a phase difference) of 90° together with an integer number. For the relative spacing of the approach switches 73, 74 one can take into account the use of fixation means. In this way edge-detection may take place in a manner known per se, in which through information line 17 transferred pulses comprise information relating to the number of passages and therefore the number of revolutions and the direction thereof. Such information can be used by microprocessors 66, 67, 68 for controlling motors 23, 31 and 18.

Microprocessor 65 comprises the whole control program of microprocessors 66, 67, 68, which, therefore, are programmed more simply. The previously loaded program determines the simultaneous or sequential operation of the several microprocessors determining the path of a picked-up object. Before a loaded coordinate-in one of the degrees of freedom is reached the related microprocessor switches the executing organ, i.e. the related motor to a lower speed so that the final destination is approached more slowly. At the arrival at the final destination the related microprocessor 66, 67, or 68 switches off the motor and advises the umbrella-microprocessor 65 of the arrival at the final position.

Microprocessor 65 supplies each of the subalternate microprocessors 66, 67, 68 three values, namely (a) the end-coordinate, (b) a "half-coordinate" and (c) an "offset"-value. The final end-coordinate is the desired end position in the related degree of freedom.

The half coordinate is a coordinate between a starting position and the end-coordinate. When the half coordinate is reached a signalling takes place that may serve the purpose of e.g. starting of a movement in an other degree of freedom giving a visual or acoustic signalling etcetera.

The offset-value is that value before reaching the end-coordinate, at which a switch has to take place to a smaller speed of displacement.

At the first start of the manipulator each degree of freedom looks for its own fixed reference point.

**Claims**

1. Manipulator, comprising

at least one grab,

driving means for moving the grab with a number of translation and/or rotation degrees of freedom which number can be chosen, and

control means coupled with said driving means for moving said grab along a path determined by at least a begin position and an end position and picking up an object in said begin position and releasing it in said end position,

characterized in that

said control means for each degree of freedom comprise a feedback-free counting unit/memory loadable previously in correspondence with the desired displacement in that degree of freedom in such a way that the driving means for each degree of freedom are only operative during an interval in which the contents of said counting unit/memory is smaller than the loaded counting value whilst the counting unit is also adapted for counting to the loaded counting value after receiving a starting signal, if desired controlled by a program for a desired loading pattern.

2. Manipulator according to claim 1, characterized in that the control means are adapted for controlling in a slower manner of the driving means at the end of the counting interval.

3. Manipulator according to claim 2, characterized in that the slower driving takes place from a previously determined value before the loaded counting value.

4. Manipulator according to anyone of the preceding claims, in which the objects are conveyed successively along a fixed path, characterized by detection means such as a light source with a photo cell or a micro switch for supplying at the arrival of an object, the start signal to the control means.

5. Manipulator according to claim 4, characterized in that the grab is provided with detection means, such as at least one micro switch, for determining the presence of a picked-up object.

6. Manipulator according to anyone of the preceding claims having a rotatable arm hingeable in a horizontal plane in the manner of an elbow, said arm being or not being up and down movable, at the end of said arm the grab being fixed, characterized by a linearly drivable driving unit, e.g. a motor provided with a screw spindle for hinging the arm around the elbow, said driving unit contacting at both sides of the elbow in a direction parallel to the direction of the connection line between the rotation centre of the arm and the grab.

7. Manipulator according to anyone of the preceding claims having an arm rotatable in a horizontal plane, which arm may or may not be up and down movable, at the end of said arm the grab being fixed, characterized in that the grab is swingable at least around a vertical axis controlled by a motor having a fixed position relative to a ground plate of the manipulator, said motor driving a pinion rotatable around a vertical axis and having a fixed position relative to the ground plate, around which pinion a chain belt or the like is extending said chain or belt extending along the arm and cooperating at the end thereof with a pinion rotatable around a vertical axis and being connection with the grab, in such a way that the angular position of the first-mentioned pinion corresponds with the horizontal angular position of the grab, irrespective of the position of the arm.

8. Manipulator according to anyone of the preceding claims, characterized in that the control means for each degree of freedom comprise a respective microprocessor, said microprocessors being coordinated by a main-microprocessor.

FIG.1

FIG. 3

FIG.2

FIG.4

FIG. 5

FIG.6

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| A | US-A-3 706 248 (ERHART)<br>* The whole document *<br>--- | 1,2 | G 05 B 19/21 |
| A | US-A-3 946 298 (v.d. LOO)<br>* The whole document *<br>--- | 1,2 | |
| A | US-A-4 143 310 (FUJINAWA)<br>* The whole document *<br><br>----- | 1,2 | |
| | | | **TECHNICAL FIELDS SEARCHED (Int. Cl.4)**<br><br>G 05 B |

The present search report has been drawn up for all claims

| Place of search | Date of completion of the search | Examiner |
|---|---|---|
| THE HAGUE | 22-12-1986 | RESSENAAR J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82